# EUROPÄISCHE PATENTANMELDUNG

(11) **EP 1 162 636 A1**
(43) Veröffentlichungstag der Anmeldung: **12.12.2001**
(21) Anmeldenummer: 01116722.8
(22) Anmeldetag: 30.08.1999
(51) Int. Cl.: H01G 9/00, H01G 9/04

(54) **Erdsäuremetall-Elektrolytkondensatoren oder -anoden**

(30) Priorität: 18.06.1999 DE 19927909
(62) Teilanmeldung aus: 99946068.6
(71) Anmelder: H.C. Starck GmbH, 38642 Goslar (DE)
(72) Erfinder: Clasen, Helge, Dipl.-Ing., 89075 Ulm (DE); Knabe, Willy, Dr., 89522 Heidenheim (DE); Gnann, Klaus, 89075 Ulm (DE); Gerblinger, Josef, Dr., 86637 Wertingen (DE); Hahn, Dieter, Dipl.-Phys., 92421 Schwandorf (DE)
(74) Vertreter: Drope, Rüdiger, Dr.

(57) **Zusammenfassung**

Es wird eine Anode für Elektrolytkondensatoren auf Basis gesinterter Erdsäuremetallpulver beschrieben, die aus einem als elektrischer Kontakt ausgebildeten metallischen Träger und einem die Kondensatorfläche darstellenden, mit dem Träger verbundenen porösen Sinterkörper besteht, wobei der Trägerkörper in Form eines Bleches ausgebildet ist und beidseitig einen Sinterkörper aufweist.

## Beschreibung

Die vorliegende Erfindung betrifft eine Paste zur Herstellung von Sinterbeschichtungen aus Refraktärmetallpulvern, insbesondere Elektrolytkondensatorelektroden aus Tantal, Niob oder deren Legierungen. Die Erfindung betrifft insbesondere ein Verfahren zum drucklosen Herstellen von Tantal- und/oder Niobkondensatorelektroden. Insbesondere betrifft die Erfindung auch ein Verfahren zur Herstellung neuartiger Elektroden und Kondensatoren mittels Pasten. Ferner betrifft die Erfindung neuartige Kondensatorelektroden mit flächigem Träger.

Tantalkondensatoren bestehen aus einer auf einen einerseits als elektrischer Kontakt und andererseits als Träger dienenden Tantaldraht aufgebrachten porösen Sinterschicht aus voragglomeriertem Tantalpulver, das mit einer dielektrischen Isolierschicht, der Oxidschicht, überzogen ist. Die Gegenelektrode wird durch einen flüssigen, pastösen oder festen Elektrolyten gebildet. Die hohe spezifische Kapazität derartiger Kondensatoren beruht auf der durch die Porosität der Sinterschicht bereitgestellten großen Fläche des Dielektrikums. Die Herstellung der Sinterschicht erfolgt durch Pressen und Sintern des rieselfähigen Pulvers. Ebenso wird bei der Herstellung von Niobkondensatoren verfahren.

Es ist einerseits klar, daß das Preßverfahren durch Einstecken des Kontaktdrahtes in die Preßform, Einfüllen des rieselfähigen Pulvers in den Spalt zwischen Kontaktdraht und Preßform, Verdichten des Pulvers usw., ein aufwendiges Verfahren ist. Darüber hinaus läßt dieses Verfahren nur begrenzte Formen und Dimensionen zu.

Andererseits erlauben Pastenauftragsverfahren ein druckloses Sintern und nahezu beliebige Formen und Dimensionen des Kondensatordesigns, insbesondere auch die Herstellung dünnflächiger Anoden.

Ein Problem der Entwicklung immer feinerer Erdsäuremetallpulver zur Erzielung von höheren spezifischen Kapazitäten ist die damit steigende Stromdichte im Sinterkörper in der Umgebung des Trägerdrahtes, die zu einer Überhitzung mit spontaner Reaktion der MnO₂-Gegenelektrode mit der Sinteranode führen kann (Abbrennen des Erdsäuremetallpulvers). Durch eine flächige Ausbildung des Sinterkörpers würden sowohl die Stromdichten reduziert als auch eine bessere Wärmeableitung gewährleistet.

Demgemäß wäre ein Verfahren, das ein Sintern nach Auftragen einer Paste auf den Kontaktdraht bzw. ein Kontaktblech erlaubt, mit erheblichen technischen Vorteilen bei erheblich geringerem technischen Aufwand verbunden. Trotz dieser offensichtlichen Vorteile, die ein solches Verfahren bieten würde, sind bisher keinerlei Vorschläge für ein solches Verfahren bekannt geworden oder in die Technik eingeführt worden. Der Grund kann darin gesehen werden, daß bisher keine Pasten bekannt geworden sind, die die vielfältigen komplexen Anforderungen der Kondensatorherstellung erfüllen. Das zu lösende Problem besteht darin, eine kontinuierliche Phase für die Paste zu finden, die die äußerst empfindliche Oberfläche des Tantal- bzw. Niobpulvers nicht beeinflußt, insbesondere vor und während des Sinterns rückstandsfrei aus der Sinterschicht entfernt wird und dennoch die für den Pastenauftrag auf das Substrat erforderlichen rheologischen Eigenschaften vermittelt, der aufgetragenen pastösen Schicht eine ausreichende Stabilität verleiht und ferner ohne Störung des Gefüges der Tantalpulverschicht aus dieser entfernt werden kann.

Zahlreiche Versuche haben gezeigt, daß Pasten, deren kontinuierliche Phase auf Basis von Wasser oder niedrigsiedenden organischen Lösungsmitteln aufgebaut ist, keine ausreichende Stabilität des Pulvergefüges bieten. Sie trocknen bereits bei Raumtemperatur oder bei erhöhter Temperatur unter Blasenbildung bis zum Aufschäumen. Anorganische oder mineralische rheologische Modifizierungsmittel scheiden wegen der Kontamination der Tantaloberfläche mit anorganischen Rückständen aus. Ebenso zu vermeiden ist die Kontamination mit Kohlenstoff, der sich aus Rückständen von organischen Bestandteilen der kontinuierlichen Phase bildet.

Es wurde nun gefunden, daß Pasten, deren kontinuierliche Phase gegebenenfalls nach Verdampfen eines niedrigsiedenden Lösungsmittels im wesentlichen aus organischen Substanzen besteht, die nur aus Kohlenstoff, Sauerstoff und Wasserstoff aufgebaut sind und bei denen das Verhältnis der Anzahl an Sauerstoffatomen zu Kohlenstoffatomen mindestens 0,5, bevorzugt mindestens 2/3, weiter bevorzugt mindestens 0,8 und insbesondere bevorzugt 1, beträgt, nach dem Sintern im Hochvakuum keine störenden Kohlenstoffrückstände hinterlassen. Derartige Pasten erlauben die Herstellung flächiger Erdsäuremetallkondensatoren.

Gegenstand der Erfindung sind Anoden für Elektrolytkondensatoren auf Basis gesinterter Erdsäuremetallpulver bestehend aus einem als elektrischer Kontakt ausgebildeten metallischen Träger und einem die Kondensatorfläche darstellenden, mit dem Träger verbundenen porösen Sinterkörper, wobei der Träger in Form eines Bleches ausgebildet ist und beidseitig mit dem Sinterkörper versehen ist.

Gegenstand der Erfindung sind auch Elektrolytkondensatoren mit gesinterter Erdsäuremetallpulver-Anode, die flächig ausgebildet sind, d.h. deren geometrische Ausdehnung in zwei Dimensionen größer ist als in der dritten Dimension.

Vorzugsweise sind die erfindungsgemäßen Anoden so ausgebildet, daß das Trägerblech den Sinterkörper in mindestens einer Richtung überragt. Hierdurch wird eine weiter verbesserte Wärmeableitung erzielt und die elektrische Kontaktierung vereinfacht.

Erfindungsgemäß kann das Trägerblech, das vorzugsweise aus Nb oder Ta besteht, ein Länge-zu-Breite-Verhältnis von 3:1 bis 10:1 oder mehr aufweisen, wobei eine Teilfläche von 0,5 bis 100 mm², vorzugsweise 2 bis 40 mm² des Trägerbleches beidseitig mit dem Sinterkörper versehen ist.

Das Trägerblech kann eine Dicke von 30 bis 500 µm, vorzugsweise 40 bis 300 µm, insbesondere bevorzugt 60 bis 150 µm, aufweisen. Der darauf aufgesinterte Sinter-Das Trägerblech kann eine Dicke von 30 bis 500 µm, vorzugsweise 40 bis 300 µm, insbesondere bevorzugt 60 bis 150 µm, aufweisen. Der darauf aufgesinterte Sinterkörper kann eine Dicke von 20 bis 2000 µm, vorzugsweise mehr als 100 µm, insbesondere bevorzugt 300 bis 1000 µm, aufweisen.

Eine geeignete Paste zur Herstellung von gesinterten Refraktärmetallschichten besteht aus 40 bis 92 Gew.-% eines Refraktärmetallpulvers als diskrete Phase, und einer kontinuierlichen Phase, die im wesentlichen nur aus Kohlenstoff, Sauerstoff und Wasserstoff aufgebauten organischen Verbindungen, wobei das Verhältnis der Anzahl von Sauerstoffatomen zu Kohlenstoffatomen mindestens 1/2 beträgt, sowie gegebenenfalls einem unter 100°C verdampfenden Lösungsmittel besteht. Bevorzugt beträgt die Menge des Refraktärmetallpulvers 10 bis 50 Volumen-% der Paste.

Obwohl die Erfindung nachfolgend am Beispiel des Tantals beschrieben wird, ist sie entsprechend auch für Niob sowie Legierungsmetalle einsetzbar.

Bevorzugt werden als organische Verbindungen bei Raumtemperatur flüssige Verbindungen eingesetzt. In diesem Falle ist die kontinuierliche Phase bevorzugt im übrigen lösungsmittelfrei. Als flüssige organische Verbindungen geeignet sind Ethylenglykol, Diethylenglykol, Tri- und Tetraethylenglycol sowie deren Ester, Glycerin, Glycerin-monoacetat, Glycerin-diacetat, Glycerin-triacetat, Dioxyaceton, Propandiol oder auch deren Mischungen. Weiter bevorzugt enthält die kontinuierliche Phase zusätzlich ein organisches Bindemittelsystem. Bevorzugt besteht das Bindemittelsystem aus zwei miteinander vernetzbaren Komponenten. Das Bindemittel soll in Mengen von nicht mehr als 5 Gew.-%, bezogen auf die kontinuierliche Phase, eingesetzt werden. Ein bevorzugtes Bindemittelsystem besteht aus Natrosol® Plus 331 der Frima Hercules oder einem Acrylpolymeren, beispielsweise Rohagit® KF 720 der Firma Röhm. Zur besseren Benetzung des Metallpulvers werden vorzugsweise Netzmittel, wie beispielsweise Sojalecithin der Fa. Langer und/oder Sulfinole der Fa. Biesterfeld, eingesetzt. Sofern das Bindemittel nur in untergeordneten Mengen eingesetzt wird, wird das Verhältnis von Sauerstoffatomen zu Kohlenstoffatomen in der kontinuierlichen Phase im wesentlichen nicht beeinflußt. Der mit dem Sojalecithin in die kontinuierliche Phase eingeführte Phosphor und der Stickstoff sind unschädlich, da Phosphor und Stickstoff zu den üblichen Dotierungssubstanzen von für Kondensatoren einsetzbare Tantalpulver gehören.

Das Bindemittelsystem wird bevorzugt so eingestellt, daß die Viskosität der Paste bei einer Schergeschwindigkeit von 10⁻⁴/sec zwischen 20 und 200 kPas beträgt.

Nach einer weiteren Ausführungsform kann die organische Verbindung auch eine feste Substanz sein. Geeignete bei Raumtemperatur feste organische Verbindungen sind Erythrit, Pentaerythrit, Pentite, Aldosen oder Ketosen mit 3 bis 6 Kohlenstoffatomen oder deren Mischungen. Ferner sind Zucker oder zuckerähnliche Verbindungen geeignet. Feste organische Verbindungen werden in Verbindung mit einem Lösungsmittel eingesetzt, wobei das Lösungsmittel bei Temperaturen bis 150°C verdampfen soll. Als Lösungsmittel geeignet sind beispielsweise Wasser, Ethanol, Propanol und kurzkettige Glycole.

Als Lösungsmittel geeignet sind ferner die genannten flüssigen organischen Verbindungen, soweit die festen organischen Verbindungen in diesen ausreichend löslich sind. Die festen organischen Verbindungen können demgemäß als Verdickungsmittel eingesetzt werden, wenn als Hauptkomponente der kontinuierlichen Phase flüssige organische Verbindungen eingesetzt werden.

Gegenstand der Erfindung ist auch das Verfahren zur Herstellung von drucklos gesinterten Refraktärmetallschichten, das dadurch gekennzeichnet ist, daß eine erfindungsgemäße Paste auf ein Substrat aufgebracht wird, das gegebenenfalls vorhandene Lösungsmittel bei einer Temperatur unterhalb der Siedetemperatur des Lösungsmittel entzogen wird, und das Substrat anschließend im Hochvakuum auf Sintertemperatur aufgeheizt wird. Wesentlich ist, daß der Temperaturbereich, in dem sich die organische Verbindung zersetzt, mit einer geringen Aufheizgeschwindigkeit von vorzugsweise weniger als 10 K/min durchfahren wird. Vorzugsweise wird der Temperaturbereich von etwa 200°C bis etwa 400°C mit einer Aufheizgeschwindigkeit von weniger als 10 K/min durchfahren.

Bei Einsatz fester organischer Verbindungen, die in einem Lösungsmittel gelöst sind, wird die auf das Substrat aufgetragene Paste beim Entfernen des Lösungsmittels in eine trockene Pulverschicht (Grünstruktur) überführt, in der die Pulverteilchen durch die eingesetzte feste organische Verbindung miteinander verklebt sind und daher in ihrer Struktur stabilisiert sind.

Es hat sich ferner gezeigt, daß es vorteilhaft ist, die Paste, gegebenenfalls nach Entfernung des Lösungsmittels, noch einige Zeit, vorzugsweise etwa 10 bis 30 Minuten, bei einer Temperatur von 150 bis 200°C in sauerstoffhaltiger Atmosphäre, vorzugsweise Luft, zu halten. Offenbar sind die eingesetzten organischen Verbindungen dabei in der Lage, zusätzlichen Sauerstoff aufzunehmen oder zu binden, der für deren rückstandsfreie Zersetzung günstig ist.

Als Substrat, auf das das Refraktärmetallpulver aufgetragen wird, wird vorzugsweise Niob- oder Tantalblech eingesetzt. Bevorzugte Refraktärmetallpulver sind für die Kondensatorherstellung geeignete Niob- und/oder Tantalpulver-Agglomerate. Für die Kondensatorelektrodenherstellung sind als Substrate insbesondere Tantal- oder Niob-Folien einer Dicke von 50 bis 400 µm geeignet.

Der Auftrag der Paste auf das Substrat kann durch Siebdruck, Schablonendruck, Rakeln, Tauchen oder Extrusion erfolgen.

Ein vorteilhaftes Verfahren zur Herstellung flächiger Tantal- oder Niob-Kondensatoranoden besteht darin, eine relativ großflächige Substratfolie durch eine Schablone, die 100 bis 1000 Ausschneidungen der gewünschten Elektrodenform und -fläche, beispielsweise 2 mm x 1mm, aufweist, mittels Schablonendruck mit der Paste zu beschichten und nach dem Sintern die Folie zu zerschneiden, so daß aus der Folie 100 bis 1000 Kondensatoranoden gewonnen werden.

Besonders bevorzugt wird die Substratfolie in Form eines Kammes ausgebildet, an dessen Zinkenspitzen je ein Sinterkörper aufgebracht wird. Der Rücken des Kammes kann dann vorteilhaft als Systemträger für eine Vielzahl von Anoden für die weitere Verarbeitung zu Kondensatoren fungieren.

Gegenstand der Erfindung ist auch der Anodenkamm enthaltend eine Vielzahl von Anoden bestehend aus einem kammartig ausgebildeten Trägerblech, wobei die Zinkenspitzen des Kammes jeweils einen Sinterkörper aus Erdsäuremetallpulver aufweisen.

Das erfindungsgemäße Anodendesign wird nachfolgend anhand der Fig. 1 bis 4 näher erläutert.
- Fig. 1: zeigt eine durch Press-Sintern nach dem Stand der Technik hergestellte Anode.
- Fig. 2: zeigt eine Ausführungsform erfindungsgemäßer Anoden.
- Fig. 3: zeigt einen Anodenkamm nach dem Stand der Technik.
- Fig. 4: zeigt einen erfindungsgemäßen Anodenkamm.

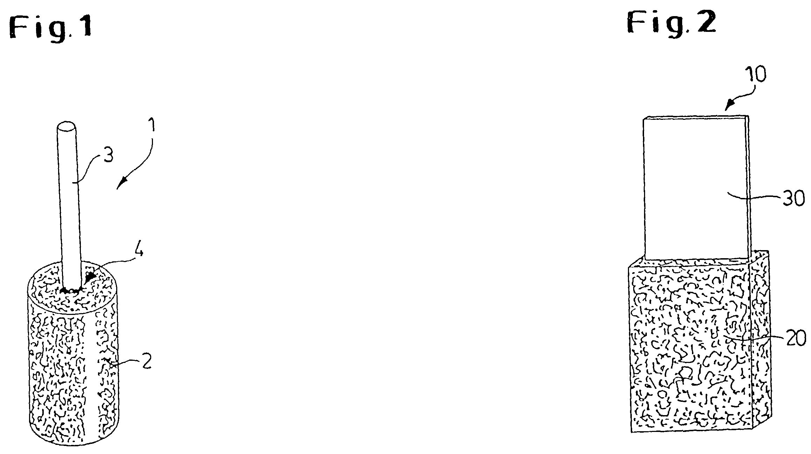

Die Anode 1 des Standes der Technik gemäß Fig. 1 besteht aus einem Sinterkörper 2, der durch Pressen und Sintern von in eine Matrize eingefülltem fließfähigen Pulver erzeugt wurde. An den Sinterkörper 2 ist mittels Schweißverbindung 4 der Zuleitungsdraht 3 angeschweißt.

Die erfindungsgemäßen Anoden 10 gemäß Fig. 2 bestehen aus einem durch Pastenauftrag auf das Trägerblech 30, Trocknen und druckloses Sintern erzeugten Sinterkörper 20. Dabei kann das Trägerblech 30 den flächigen Sinterkörper 20 allseitig überragen oder nur in einer Richtung überragen, wobei auch beidseitig des Trägers ein Sinterkörper vorgesehen ist. Ferner kann der Sinterkörper (Pastenauftrag z.B. durch Tauchen) das Trägerblechende vollständig umfassen.

In allen Fällen übernimmt der den Sinterkörper überragende Teil des Trägerbleches die Funktion des Zuleitungsdrahtes 3 (Fig. 1).

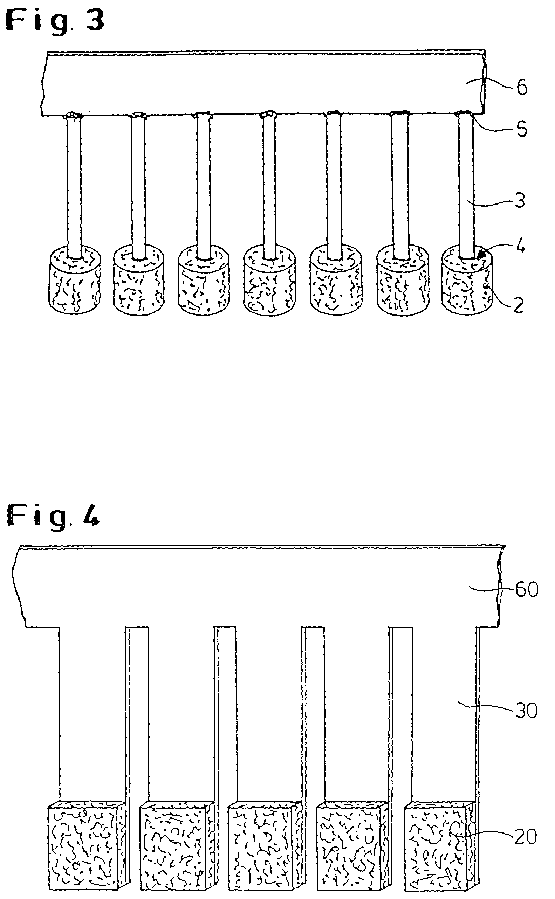

Fig. 3 zeigt einen Anodenkamm nach dem Stand der Technik, wobei die Sinterkörper 2 über den Zuleitungsdraht 3 mit Schweißverbindungen 4 und 5 mit dem Systemträgerblech 6 verbunden sind.

Bei dem Anodenkamm nach Fig. 4 entfallen die nach dem Stand der Technik erforderlichen Schweißverbindungen 4 und 5, da der Kammrücken 60, der den Systemträger bildet, und die Zinken 30, deren Spitzen die Sinterkörper 20 tragen, vor oder nach dem Pastenauftrag oder nach dem Sintern aus einem Stück Blech gebildet wurden.

Die Erfindung wird durch die nachfolgenden Beispiele erläutert. %-Angaben sind Gewichtsprozente.

### Beispiel 1

77,6 % Ta-Pulver, bestehend aus Agglomeraten von Primärteilchen mit einer Agglomeratverteilung von d₁₀ = 2 µm, d₅₀ = 5 µm und d₉₀ = 26 µm nach Mastersizer, die visuell bestimmte mittlere Primärteilchengröße beträgt etwa 300 nm, die spezifische Oberfläche nach BET beträgt 0,77 m²/g und die Schüttdichte 23,60 g/inch³, wurden mit 21,4 % Glycerin, 0,2 % Surfinol 420 (eine Mischung ethoxylierter Ethindiole der Fa. Air Products), 0,8 % Sojalecithin W250 der Fa. Langer und 0,02 % Rohagit KF720 (ein festes Acrylpolymer der Fa. Röhm) angerührt und mittels Dreiwalzwerk homogenisiert.

Nach 24 Stunden Ruhezeit wird die Viskosität mittels Rheometer der Fa. Bohlin Instruments (Meßsystem CP4°/20 Korrekt) bestimmt. Bei einer Schergeschwindigkeit von 10⁻⁴s⁻¹ betrug die Viskosität 28 kPas, bei 10⁻²s⁻¹ 109 Pas und bei 10 s⁻¹ 13 Pas (25°C).

### Beispiel 2

82,6 % Ta-Pulver, bestehend aus Agglomeraten von Primärteilchen mit einer Agglomeratverteilung von d₁₀ = 2 µm, d₅₀ = 5 µm und d₉₀ 26 µm nach Mastersizer, die visuell bestimmte mittlere Primärteilchengröße beträgt etwa 300 nm, die spezifische Oberfläche nach BET beträgt 0,77 m²/g und die Schüttdichte 23,60 g/inch³, wurden mit 16% Tetraethylenglycol, 0,6 % Cellulose Natrosol Plus von der Fa. Hercules, 0,2 % Surfinol 420 (eine Mischung ethoxylierter Ethindiole der Fa. Air Products), 0,6 % Sojalecithin W250 der Fa. Langer angerührt und mittels Dreiwalzenwerk homogenisiert.

Nach 24 Stunden Ruhezeit wird die Viskosität mittels Rheometer der Fa. Bohlin Instruments (Meßsystem CP4°/20 Korrekt) bestimmt.

Bei einer Schergeschwindigkeit von 10⁻⁴s⁻¹ betrug die Viskosität 75 kPas, bei 10⁻²s⁻¹ 2 kPas und bei 10 s⁻¹ 5 Pas (25°C).

### Beispiel 3

Als Substrat dient mit Isopropylalkohol gewaschene Tantal-Folie einer Dicke von 150 µm. Auf die Ta-Folie wird eine Edelstahl-Schablone einer Dicke von 400 µm, die 550 rechteckige Ausschneidungen der Abmessung 1 mm mal 2 mm aufweist, aufgelegt. Anschließend wird eine Paste gemäß Beispiel 2 mittels einer Rakel in die Ausschneidungen gedrückt. Die mit gedruckten Strukturen versehene Ta-Folie wird 10 Minuten lang im Umluftofen behandelt. Anschließend wird im Sinterofen unter Hochvakuum mit einer Rate von 5 K/min auf 200°C, dann 2 K/min auf 400°C und 25 K/min auf 1300°C geheizt. Nach weiteren 30 min wird auf Raumtemperatur (<100°C) abgekühlt. Die Sinterdichte der Sinterstrukturen beträgt 4,2 g/cm³. Die Tantalfolie wurde zwischen den Sinterstrukturen in Einzelanodenstrukturen zerschnitten und bei 40 V formiert.

### Elektrischer Test:

An drei der derart hergestellten Anoden wurden elektrische Messungen durchgeführt: Es ergaben sich folgende Werte:

| Probe | Kapazität µ FV/g | Leckström nA/µFV |
|---|---|---|
| 1 | 43331 1 | 0,55 |
| 2 | 44857 | 0,56 |
| 3 | 44216 | 0,58 |

## Patentansprüche

1. Anode für Elektrolytkondensatoren auf Basis gesinterter Erdsäuremetallpulver bestehend aus einem als elektrischer Kontakt ausgebildeten metallischen Träger und einem die Kondensatorfläche darstellenden, mit dem Träger verbundenen porösen Sinterkörper, **dadurch gekennzeichnet, daß** der Trägerkörper in Form eines Bleches ausgebildet ist und beidseitig einen Sinterkörper aufweist.

2. Anode nach Anspruch 1, wobei das Blech den Sinterkörper in zumindest einer Richtung überragt.

3. Vielzahl von über einen gemeinsamen elektrischen Kontakt verbundenen Anoden für Elektrolytkondensatoren auf Basis gesinterter Erdsäuremetallpulver, wobei der gemeinsame elektrische Kontakt in Form eines kammartig ausgebildeten Metallbleches ausgebildet ist und auf den Zinken des Kammes die die Kondensatorelektrodenfläche bildenden Sinterkörper aufgesintert sind.

4. Anode nach einem der Ansprüche 1 bis 3, wobei das Blech bzw. der Zinken ein Querschnittsverhältnis von mindestens 1:5 aufweist.

5. Anode nach einem der Ansprüche 1 bis 4, wobei das Trägerblech eine Dicke von 30 bis 500 µm, vorzugsweise 40 bis 300 µm, aufweist.

6. Anode nach einem der Ansprüche 1 bis 5, wobei der poröse Sinterkörper eine Fläche von 0,5 bis 100 mm², vorzugsweise 2 bis 40 mm² des Trägerbleches bedeckt.

7. Anode nach einem der Ansprüche 1 bis 5, wobei der Sinterkörper eine Dicke von 0,1 bis 2 mm, vorzugsweise 0,3 bis 1 mm, hat.

8. Verfahren zur Herstellung von Anoden gemäß einem der Ansprüche 1 bis 7, **dadurch gekennzeichnet, daß** eine Paste auf ein Trägerblech aufgetragen und drucklos gesintert wird.

9. Verfahren nach Anspruch 8, **dadurch gekennzeichnet, daß** als Substrat Nioboder Tantalblech eingesetzt und als Refraktärmetallpulver für die Kondensatorherstellung geeignete Niob- und/oder Tantalpulver-Agglomerate eingesetzt werden.

10. Verfahren nach einem der Ansprüche 8 oder 9, **dadurch gekennzeichnet, daß** die Paste in Form von Flächenstrukturen mittels einer Schablone durch Rakeln auf das Substrat aufgebracht wird.
